# FASCICULE DE BREVET EUROPEEN

(11) **EP 3 281 768 B1**
(45) Date de publication et mention de la délivrance du brevet: **12.06.2019**
(21) Numéro de dépôt: 17306355.3
(22) Date de dépôt: 09.10.2017
(51) Int. Cl.: B29C 49/42, B05C 13/02, B65G 47/64

(54) **INSTALLATION DE FABRICATION DE RECIPIENTS COMPORTANT UNE ROUE DE CONTOURNEMENT D'UNE STATION DE REVETEMENT**
ANLAGE ZUR HERSTELLUNG VON BEHÄLTERN, DIE EIN RAD ZUM UMLAUFEN EINER BESCHICHTUNGSSTATION UMFASST
INSTALLATION FOR MANUFACTURING CONTAINERS INCLUDING A WHEEL FOR BYPASSING A COATING STATION

(30) Priorité: 12.10.2016 FR 1659843
(43) Date de publication de la demande: 14.02.2018
(73) Titulaire: Sidel Participations, 76930 Octeville-sur-Mer (FR)
(72) Inventeur: FEILLOLEY, Franck, 76930 Octeville-sur-mer (FR); DANEL, Laurent, 76930 Octeville-sur-mer (FR); LINGLET, Stéphane, 76930 Octeville-sur-mer (FR)
(74) Mandataire: Grassin d'Alphonse, Emmanuel Jean Marie

(56) Documents cités:
- WO-A2-2006/097796
- DE-A1-102014 018 778
- FR-A1- 2 510 470
- FR-A1- 3 034 037
- US-A1- 2015 375 441
- US-B2- 8 307 977

## Description

### DOMAINE TECHNIQUE DE L'INVENTION

L'invention concerne une installation de fabrication de récipient thermoplastique comportant une station de revêtement de récipient.

Des installations apparentées de l'art antérieur sont décrites dans les documents FR3034037A1, US8307977B2, US2015/375441 A1 et FR2510470A1.

L'invention concerne plus particulièrement une installation de fabrication de récipients thermoplastiques comportant :- une station de revêtement de récipients comportant une roue d'entrée et une roue de sortie, chacune desdites roues étant équipée d'organes de préhension régulièrement répartis à sa périphérie ;- une roue amont de convoyage équipée d'organes de préhension régulièrement répartis à sa périphérie, la roue amont de convoyage étant agencée pour permettre le transfert de récipients par passage synchronisé lorsqu'un organe de préhension de la roue amont de convoyage portant un récipient est en coïncidence avec un organe de préhension de la roue d'entrée dans une zone de tangence d'entrée entre les deux roues ;- une roue aval de convoyage équipée d'organes de préhension régulièrement répartis à sa périphérie, la roue aval de convoyage étant agencée pour permettre le transfert de récipients par passage synchronisé lorsqu'un organe de préhension de la roue de sortie portant un récipient est en coïncidence avec un organe de préhension de la roue aval de convoyage dans une zone de tangence de sortie entre les deux roues.

### ARRIERE PLAN TECHNIQUE DE L'INVENTION

On connaît déjà des installations de ce type. La station de revêtement est utilisée pour revêtir la paroi de récipients formés avec une couche de matériau améliorant les propriétés d'étanchéité aux gaz du récipient. Cette couche est par exemple réalisée par dépôt par plasma à l'intérieur du récipient.

L'amélioration de l'étanchéité est notamment utilisée pour des récipients formés par des bouteilles de petite taille, par exemple inférieur à 80 cl, qui sont destinées à être remplies d'une boisson gazeuse. En l'absence de cette couche d'étanchéité, on a en effet constaté que le gaz contenu dans les boissons gazeuses avait tendance à s'échapper à travers les parois du récipient trop rapidement pour permettre sa mise dans le commerce.

Un tel problème ne se pose pas pour des bouteilles de contenance plus grande. En effet, le rapport entre le volume de la bouteille et l'aire de la paroi permet de limiter l'évaporation du gaz suffisamment longtemps pour garantir la teneur en gaz de la boisson au client.

La station de revêtement est agencée en série dans une ligne de fabrication, en aval d'une station de soufflage et en amont d'une station de remplissage.

Les installations équipées de la station de revêtement sont en conséquence adaptées pour produire uniquement des récipients de petite contenance. Or, les fabricants de bouteilles souhaitent désormais bénéficier d'installations de fabrications susceptibles de produire des bouteilles de formats variés. Ainsi, les bouteilles de grande contenance ou les bouteilles qui sont destinées à être remplies de boisson non gazeuse n'ont pas besoin d'être revêtue d'une couche d'étanchéité.

En outre, lorsque le fonctionnement de la station de revêtement doit être interrompu, par exemple pour des raisons de maintenance, la totalité de la production de l'installation est interrompue. L'immobilisation de l'installation entraîne ainsi une perte de production importante pour le fabricant.

### BREF RESUME DE L'INVENTION

L'invention propose une installation de fabrication de récipient du type décrit précédemment, caractérisé en ce qu'elle comporte une roue de contournement équipée d'organes de préhension individuelle de récipients régulièrement répartis à sa périphérie, la roue de contournement étant directement tangente avec la roue amont de convoyage dans une zone de tangence amont et la roue de contournement étant directement tangente avec la roue aval de convoyage dans une zone de tangence aval.

Selon d'autres caractéristiques de l'installation de fabrication réalisée selon les enseignements de l'invention :
- la zone de tangence amont entre la roue de convoyage amont et la roue de contournement est agencée en aval de la zone de tangence d'entrée entre la roue de convoyage amont et la roue d'entrée ;
- la zone de tangence aval entre la roue de contournement et la roue de convoyage aval est agencée en amont de la zone de tangence de sortie entre la roue de convoyage aval et la roue de sortie ;
- deux organes de préhension consécutifs de chacune des roues d'entrée et de sortie sont écartés d'un pas circonférentiel deux fois supérieur au pas circonférentiel séparant deux organes de préhension consécutifs de chacune des roues de convoyage amont et aval ;
- chaque roue de convoyage amont et aval est équipée de premiers organes de préhension adaptés pour la préhension de récipients présentant un premier format qui sont agencés en alternance avec des deuxièmes organes de préhension adaptés pour la préhension de récipients présentant un deuxième format ;
- deux organes de préhension consécutifs de la roue de contournement sont écartés d'un pas circonférentiel deux fois supérieur au pas circonférentiel séparant deux organes de préhension consécutifs de chacune des roues de convoyage amont et aval ;
- deux organes de préhension consécutifs de la roue de contournement sont écartés d'un pas circonférentiel identique au pas circonférentiel séparant deux organes de préhension consécutifs de chacune des roues de convoyage amont et aval ;
- la roue de contournement est équipée de premiers organes de préhension adaptés pour la préhension de récipients présentant le premier format qui sont agencés en alternance avec des deuxièmes organes de préhension adaptés pour la préhension de récipients présentant du deuxième format.

L'invention concerne aussi un procédé d'utilisation d'une telle installation, caractérisé en ce que les récipients sont distribués à la roue de convoyage amont un organe de préhension sur deux, la roue de contournement tournant de manière synchronisée avec les roues de convoyage amont et aval.

Selon d'autres caractéristiques du procédé d'utilisation :
- la roue de contournement est équipée de premiers organes de préhension adaptés pour la préhension de récipients présentant le premier format qui sont agencés en alternance avec des deuxièmes organes de préhension adaptés pour la préhension de récipients présentant du deuxième format ;
- les récipients sont distribués à la roue de convoyage amont un organe de préhension sur deux, la roue de contournement tournant de manière synchronisée avec les roues de convoyage amont et aval ;
- les roues d'entrée et de sortie sont désynchronisées des roues de convoyage, les organes de préhension desdites roues d'entrée et de sortie susceptibles d'interférer avec le passage des récipients étant démontées ;
- la roue d'entrée et la roue de sortie sont synchronisées en rotation avec les roues de convoyage de manière que les organes de préhension des roues d'entrée et de sortie soient en coïncidence avec des organes de préhension vides dans les zones de tangence d'entrée et de sortie.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue schématique de dessus qui représente une installation de fabrication de récipients réalisé selon les enseignements de l'invention ;
- la figure 2 est une vue en perspective qui représente une table de convoyage de l'installation de la figure 1 qui comporte une roue de contournement selon les enseignements de l'invention ;
- la figure 3 est une vue de dessus qui représente deux roues de convoyage tangentes de la table de convoyage de la figure 2 ;
- la figure 4 est une vue de dessus qui représente les roues de convoyage de la table de convoyage de la figure 2 ainsi que les roues d'entrée et de sortie d'une station de revêtement ;
- la figure 5 est une vue similaire à celle de la figure 4 dans laquelle l'installation fonctionne en mode de contournement selon un premier mode de réalisation de l'invention ;
- la figure 6 est une vue similaire à celle de la figure 4 dans laquelle l'installation fonctionne en mode de revêtement des récipients selon un deuxième mode de réalisation de l'invention ;
- la figure 7 est une vue similaire à celle de la figure 5 dans laquelle l'installation fonctionne en mode de contournement selon un deuxième mode de réalisation de l'invention.

### DESCRIPTION DETAILLEE DES FIGURES

Dans la suite de la description, des éléments présentant une structure identique et/ou une fonction analogue seront désignés par une même référence.

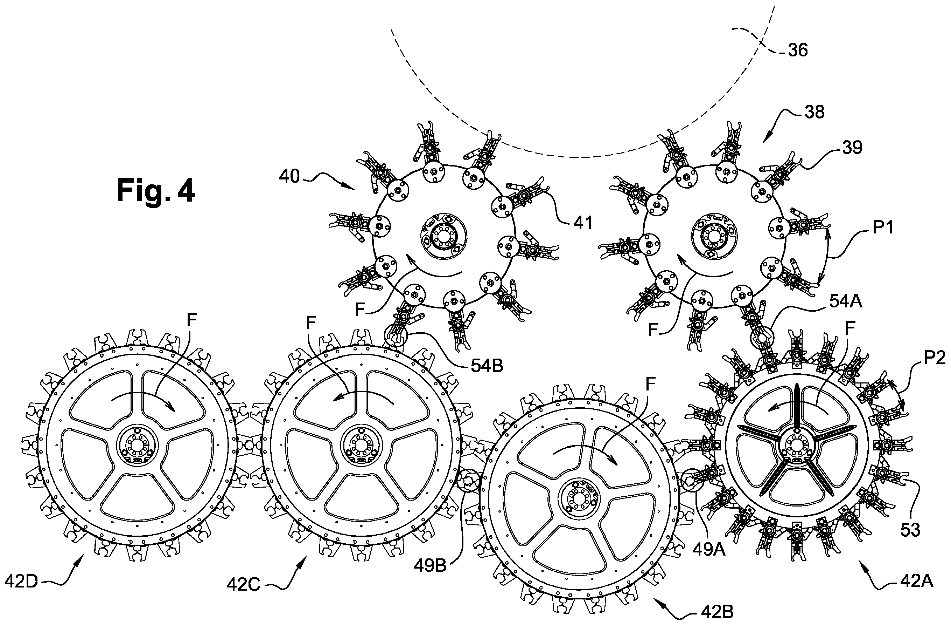

Dans la suite de la description, on utilisera les termes "amont" et "aval" en fonction du sens de déplacement des récipients 18 ou en fonction du sens de rotation des roues. Le sens de rotation de chaque roue est indiqué par une flèche "F" à la figure 4 et demeure le même sur toutes les figures.

Dans la suite de la description, des récipients de "format" différents présenteront des cols différents, notamment un diamètre extérieur de col différent.

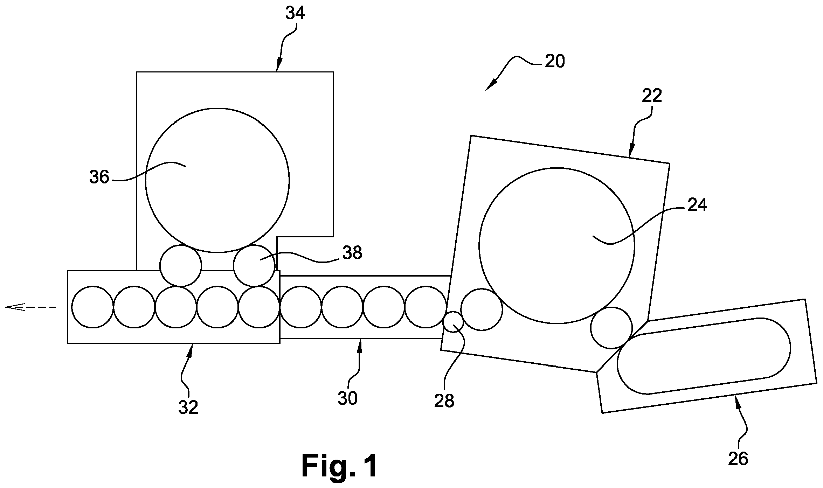

On a représenté à la figure 1 une installation 20 de fabrication de récipients 18 en grande série, notamment de bouteilles. L'installation 20 comporte plusieurs modules dont chacun est destiné à être installé en un bloc. A cet effet, chaque module comporte un unique châssis porteur. Le châssis d'un module est conçu pour pouvoir être transporté et déposé en un seul bloc sur le sol.

Dans l'exemple représenté à la figure 1, un premier module est formé par une station 22 de formage. La station 22 de formage comporte un carrousel 24 de formage de préformes préalablement chauffées. Le carrousel 24 est porté par le châssis de la station 22 de formage. Le carrousel 24 porte une pluralité d'unités de moulage (non représentées) qui sont destinées à conformer les préformes en récipients 18 par formage au moyen d'un fluide sous pression. Pendant l'opération de formage, le carrousel 24 tourne de manière à déplacer les corps creux en continu depuis un point de chargement d'une préforme chaude jusqu'à un point de déchargement du récipient 18 formé. Un tel carrousel 24 est bien connu de l'homme du métier. Il ne sera donc pas décrit plus en détails.

Un four 26 de conditionnement thermique de préformes est ici agencé en amont de la station 22 de formage. Il s'agit ici d'un tunnel de chauffage qui est parcouru par une chaîne d'organes (non représentés) de préhension dont chacun est apte à porter une préforme. Les préformes sont ainsi chauffées durant leur convoyage à travers le tunnel de chauffage depuis un point d'entrée des préformes froides jusqu'à un point de transfert des préformes chaudes en direction du carrousel 24 de formage. Un tel four 26 de conditionnement est bien connu de l'homme du métier. Il ne sera donc pas décrit plus en détails par la suite.

Les récipients 18 sortent en continu de la station 22 de formage par l'intermédiaire d'un dispositif 28 de transport de sortie porté par le châssis de la station 22 de formage. Le dispositif 28 de transport de sortie est ici formé par une roue de transfert entraînée en rotation autour d'un axe sensiblement vertical. La roue de transfert comporte à sa périphérie des organes (non représentés) de préhension individuelle de récipient 18.

Un deuxième module est agencé directement en aval de la station 22 de formage. Il s'agit d'une première table 30 de convoyage. Elle est apte à prendre en charge les récipients 18 sortant de la station 22 de formage par l'intermédiaire du dispositif 28 de transport de sortie pour les transporter jusqu'à un module aval suivant.

Le module aval suivant est formé par une deuxième table 32 de convoyage qui sera décrite plus en détails par la suite. Cette table de convoyage est notamment destinée à assurer l'alimentation et l'évacuation des récipients 18 dans un module formé par une station 34 de revêtement des récipients 18 avec une couche dite "barrière".

La station 34 de revêtement comporte un carrousel 36 de traitement qui est porté par un châssis de la station 34 de revêtement.

Comme cela est représenté plus en détails à la figure 4, les récipients 18 sont acheminés en continu jusqu'au carrousel 36 de traitement par l'intermédiaire d'une roue 38 de transfert d'entrée, dite "roue d'entrée" par la suite. La roue 38 d'entrée est entraînée en rotation autour d'un axe sensiblement vertical. Elle comporte des organes 39 de préhension individuelle de récipient 18 régulièrement répartis à sa périphérie.

Les récipients 18 traités sortent du carrousel 36 de traitement par l'intermédiaire d'une roue 40 de transfert de sortie, dite "roue de sortie" par la suite. La roue 40 de sortie est entraînée en rotation autour d'un axe sensiblement vertical. Elle comporte des organes 41 de préhension individuelle de récipient 18 régulièrement répartis à sa périphérie.

La roue 38 d'entrée et la roue 40 de sortie sont portées par un châssis (non représenté) qui porte le carrousel 36 de traitement.

De manière traditionnelle, les récipients 18 sont amenés à la roue 38 d'entrée par l'intermédiaire d'une roue 42A de convoyage amont. La roue 42A de convoyage amont est portée par l'une des tables de convoyage, ici la deuxième table 32 de convoyage.

A leur sorties, les récipients 18 sont transférés depuis la roue 40 de sortie jusqu'à une roue 42C de convoyage aval qui initie le transport des récipients 18 revêtus vers une station de traitement suivante, telle qu'une station de remplissage. La roue 42C de convoyage aval est ici portée par la deuxième table 32 de convoyage.

L'invention propose d'interposer une roue de convoyage, dite "roue 42B de contournement" entre la roue 42A de convoyage amont et la roue 42C de convoyage aval pour permettre à des récipients 18 de contourner la station 34 de revêtement. Ceci permet ainsi de fabriquer des récipients 18 ne comportant pas de couche barrière. De plus, cela permet aussi de continuer à produire des récipients 18 lorsque la station 34 de revêtement est mise hors ligne, par exemple pour une opération de maintenance et/ou pour changer de format de récipient.

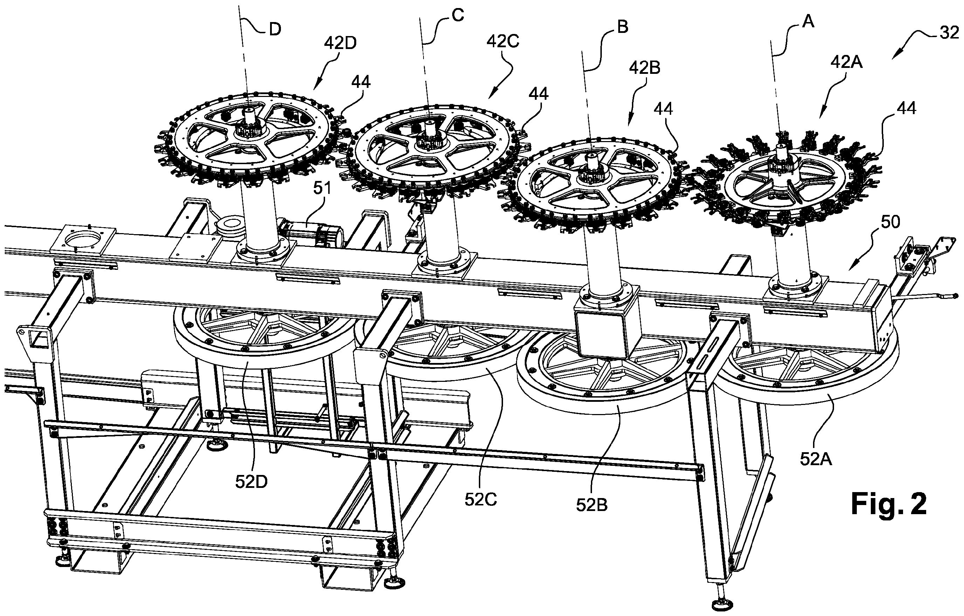

On a représenté à la figure 2, un tronçon d'extrémité amont de la deuxième table 32 de convoyage équipés de ladite roue 42B de contournement.

La deuxième table 32 de convoyage comporte une succession d'au moins trois roues 42A à 42C de convoyage. La roue 42C forme la roue 42C de convoyage aval qui est destinée à recevoir les récipients 18 portés par le roue 40 de sortie de la station 34 de revêtement pour les convoyer vers une station aval telle qu'une station de remplissage ou une station d'étiquetage.

La roue 42A forme la roue 42A de convoyage amont qui est destinée à alimenter la roue 38 d'entrée de la station 34 de revêtement en récipients 18.

Selon sa longueur, la table 32 de convoyage peut comporter d'autres roues de convoyage, par exemple au moins une roue 42D aval qui est agencée en aval de la roue 42C de convoyage. Les récipients 18 sont susceptibles de se déplacer ainsi en passant successivement par les roues 42A puis 42C et 42D de convoyage, dans un mode d'activation de la station 34 de revêtement, ou en passant successivement par toutes les roues 42A à 42D, dans un mode de contournement de la station 34 de revêtement.

Par la suite, les références d'un élément associé à une roue de convoyage particulière seront suivies d'une lettre associée à cette roue de convoyage.

Chaque roue 42A à 42D de transfert s'étend dans un plan horizontal et elle comporte un axe vertical central de rotation. Les axes de rotations de chaque roue 42A à 42D de convoyage seront désignés respectivement par les références "A" à "D".

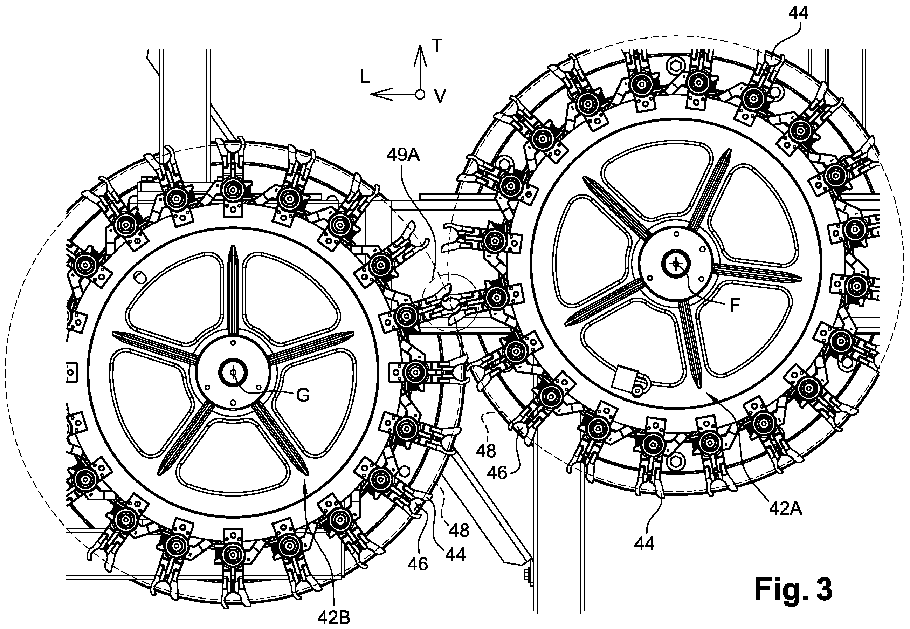

On a représenté plus en détails à la figure 3 deux roues 42A, 42B de convoyage tangentes entre elles. La description qui va suivre est bien entendu applicable à toutes les roues 42A à 42D de convoyage de la table 32 de convoyage, toutes les roues 42A à 42D présentant une structure sensiblement identique.

En se reportant à la figure 3, chaque roue 42A, 42B de convoyage comporte à sa périphérie des organes 44A, 44B de préhension individuelle d'un récipient 18. Comme cela sera expliqué par la suite, les organes 44A à 44B de préhension sont en nombre pair sur chaque roue 42A, 42B de convoyage, ici au nombre de vingt par roue de convoyage. Ils sont répartis régulièrement à la périphérie de la roue 42A, 42B de convoyage. Chaque organe 44A, 44B de préhension est susceptible de supporter individuellement un récipient 18 et de le maintenir en position pendant son transport.

Dans le mode de réalisation représenté aux figures, chaque organe 44A à 44D de préhension est formé par une pince qui est susceptible de saisir le récipient 18 par son col. Les pinces de chaque organe 44A à 44D de préhension peuvent présenter une structure différente pour réaliser la fonction de préhension.

En se reportant à nouveau à la figure 3, on appellera centre 46 de la pince le point compris entre deux mors de la pince 44A, 44B qui correspond à la position d'un axe du col (non représenté) du récipient 18 lorsqu'il est saisi par la pince. On appellera par la suite cercle 48 de référence, un cercle centré sur l'axe de rotation de chaque roue 42A, 42B de convoyage qui passe par le centre 46 des pinces de ladite roue 42A, 42B de convoyage.

Pour permettre le transfert des récipients 18 d'une roue 42A de convoyage à la roue 42B de convoyage suivante, deux roues de convoyage successives sont tangentes en projection horizontale. Plus particulièrement, leurs cercles 48 de référence sont tangents dans une zone 49A de tangence.

En référence à la figure 3, lorsqu'ils sont formés par des pinces, les organes 44A de préhension de la roue 42A de convoyage amont sont commandés en position ouverte pour laisser le récipient 18 partir sur la roue 42B de convoyage aval lorsqu'ils passent dans la zone 49A de tangence, par exemple au moyen de commandes à came (non représentées). Juste avant que l'organe 44A de préhension soit commandé en position ouverte, l'organe 44B correspondant de la roue 42B de convoyage suivante est commandé en position fermé, par exemple au moyen de commandes à came, pour saisir ladite préforme. Ainsi, la préforme est en permanence maintenue par au moins un organe de préhension. L'ouverture de l'organe 44A de préhension permet de laisser la préforme partir sur la roue 42B suivante. Ce fonctionnement est bien entendu applicable à toutes les roues de convoyage tangentes.

Comme cela est représenté à la figure 3, la roue 42A de convoyage d'extrémité amont et la roue 42B de contournement sont directement tangente dans la zone 49A de tangence entre les deux roues 42A, 42B de convoyage, dite "zone 49A de tangence amont". Dans cette zone 49A de tangence amont, chaque organe 44A de préhension de la roue 42A de convoyage amont est susceptible de coïncider verticalement avec un organe 44B de préhension correspondant de la roue 42B de de contournement de manière que le col du récipient 18 soit supporté simultanément par les deux organes 44A, 44B de préhension coïncidant. A cet effet, les organes 44A de préhension d'une roue 42A sont légèrement décalés verticalement, dans le sens de la hauteur, par rapport aux organes 44B de préhension des roues 42B adjacentes pour éviter toute interférence entre eux lors de leur passage dans la zone 49A de tangence.

Comme représenté de manière moins détaillée à la figure 4, la roue 42B de contournement et la roue 42C de convoyage aval sont aussi directement tangentes dans une zone 49B de tangence entre les deux roues 42B, 42C de convoyage, dite "zone 49B de tangence aval". Dans cette zone 49B de tangence aval, chaque organe 44B de préhension de la roue 42B de contournement est susceptible de coïncider verticalement avec un organe 44C de préhension correspondant de la roue 42C de convoyage aval de manière que le col du récipient 18 soit supporté simultanément par les deux organes 44B, 44C de préhension coïncidant.

Cette disposition de la roue 42B de contournement directement tangente simultanément avec la roue 42A de convoyage amont et avec la roue 42C de convoyage aval permet le transfert de récipients 18 depuis la roue 42A de convoyage amont jusqu'à la roue 42C de convoyage aval parallèlement à la station de revêtement, c'est-à-dire sans que le récipient ait à passer par la station de revêtement.

La table 32 de convoyage comporte aussi un châssis 50 commun rigide qui porte à rotation autour de leur axe "A" à "D" toutes les roues 42A à 42D de convoyage.

Par châssis "rigide", on comprendra que le châssis 50 se déforme peu pendant son transport. Le châssis 50 n'est notamment pas articulé.

De manière connue, deux roues de convoyage successives tournent en sens inverse de manière synchronisée pour que chaque organe 44 de préhension soit en coïncidence avec un organe 44 de préhension correspondant de la roue de transfert aval dans la zone de tangence.

Avantageusement, un unique organe 51 de motorisation entraîne en rotation toutes les roues 42A à 42D de convoyage en chaîne par l'intermédiaire d'organes de transmission de mouvement.

A cet effet, chaque roue 42A à 42D de convoyage est montée solidaire en rotation avec un engrenage 52A à 52D coaxial qui engrène directement avec un engrenage 52A à 52D monté solidaire en rotation coaxialement avec la roue 42A à 42D de convoyage adjacente, comme cela est illustré à la figure 2.

Les engrenages 52A à 52D présentent un diamètre primitif qui est sensiblement égal au diamètre du cercle 48 de référence des roues 42A à 42D de convoyage.

Ainsi, la mise en rotation d'une roue 42A à 42D de convoyage quelconque de la table 32 de convoyage entraîne en rotation de manière synchronisée toutes les autres roues 42A à 42D de transfert de la table 32 de convoyage par engrènement successif des engrenages 52A à 52D les uns avec les autres.

Comme représenté à la figure 2, l'organe 51 de motorisation est par exemple formé par un moteur, ici un moteur électrique, qui entraîne en rotation un pignon d'entraînement engrené avec l'engrenage 52D de l'une des roues 42D de convoyage.

En variante, on comprendra que les engrenages peuvent être remplacés par d'autres moyens connus de transmission synchronisée de mouvement, tels que des courroies et des poulies.

Selon une autre variante, chaque roue est motorisée individuellement. Les moteurs de chaque roue sont alors synchronisés par une unité électronique de commande.

Dans le mode de réalisation représenté aux figures, les organes 52A à 52D de transmission ne sont pas destinés à être accouplés à des organes de transmission d'un autre module, notamment à la station 34 de revêtement. Ainsi, les roues 38, 40 d'entrée et de sortie sont susceptible d'être désynchronisées des roues 42 de convoyage de la table 32 de convoyage.

En reprenant la définition des zones 49A, 49B de tangence amont et aval, on définit une zone 54A de tangence d'entrée entre la roue 42A de convoyage aval et la roue 38 d'entrée de la station 34 de revêtement. De même, on définit une zone 54B de tangence de sortie entre la roue 42C de convoyage aval et la roue 40 de sortie de la station 34 de revêtement.

Pour permettre un transfert efficace des récipients 18 entre les roues 42A, 42C de convoyage amont et aval et les roues 38, 40 d'entrée et de sortie, chacune des roues 38, 40 d'entrée et de sortie présente un cercle de référence de diamètre égal à celui des roues 42A à 42D de convoyage. En outre, en fonctionnement normal, les roues 38, 40 d'entrée et de sortie tournent à la même vitesse que les roues 42A à 42D de convoyage.

Les récipients 18 sont pris en charge par la roue 42A de convoyage amont en un point 53 qui correspond ici à une zone de tangence avec une roue de convoyage d'extrémité aval de la première table 30 de convoyage.

En considérant le sens de déplacement des récipients 18 transportés par la roue 42A amont de convoyage, la zone 49A de tangence amont entre la roue 42A de convoyage amont et la roue 42B de contournement est agencée en aval de la zone 54A de tangence d'entrée entre la roue 42A de convoyage amont et la roue 38 d'entrée. Ainsi, des récipients 18 portés par la roue 42A de convoyage amont passent d'abord par la zone 54A de tangence d'entrée avant d'arriver dans la zone 49A de tangence amont.

De même, en considérant le sens de déplacement des récipients 18 transportés par la roue 42C aval de convoyage, la zone 49B de tangence aval entre la roue 42B de contournement et la roue 42C de convoyage aval est agencée en amont de la zone 54B de tangence de sortie entre la roue 42C de convoyage aval et la roue 40 de sortie. Ainsi, des récipients 18 portés par la roue 42C de convoyage aval passe d'abord par la zone 49B de tangence aval avant d'arriver dans la zone 54B de tangence de sortie.

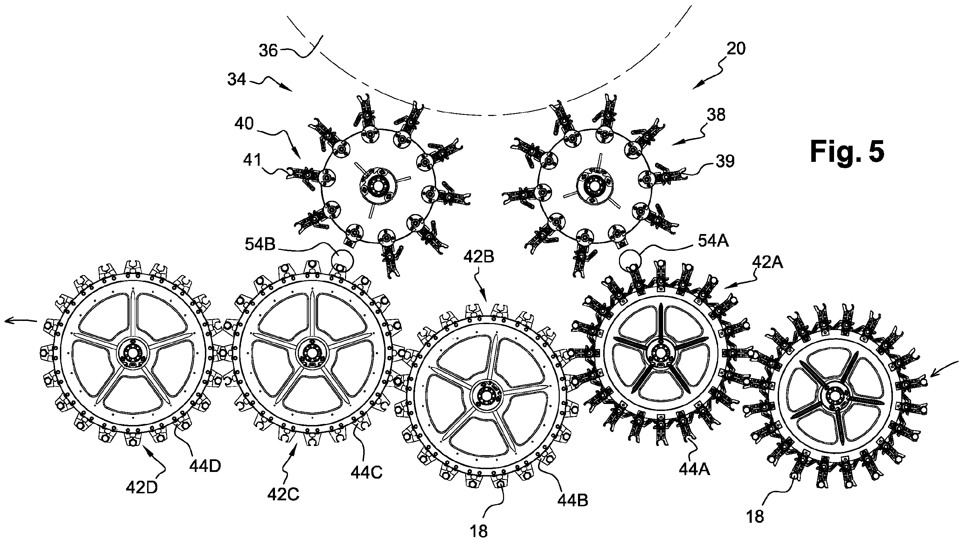

Selon un premier mode de réalisation de l'invention, lorsque l'installation 20 fonctionne dans un mode de contournement de la station 34 de revêtement, les organes 39, 41 de préhension desdites roues 38, 40 d'entrée et de sortie susceptibles d'interférer avec le passage des récipients 18 sont démontées, comme cela est illustré à la figure 5.

Ainsi, lorsque les roues 38, 40 d'entrée et de sortie de la station 34 de revêtement sont immobilisées, seuls les organes 39, 41 de préhension qui se trouvent dans les zones 54A, 54B de tangence d'entrée et de sortie sont démontés.

En variante, lorsque les roues 38, 40 d'entrée et de sortie de la station 34 de revêtement sont destinées à tourner, par exemple pour une opération de maintenance, tous les organes 39, 41 de préhension desdites roues 38, 40 sont démontés.

De cette manière, les récipients 18 passent de la roue 42A de convoyage amont jusqu'à la roue 42C de convoyage aval par l'intermédiaire de la roue 42B de contournement.

Dans ce mode de réalisation, les roues 38, 40 d'entrée et de sortie sont chacune susceptibles de comporter autant d'organe de préhension qu'une roue de convoyage.

En outre, dans ce mode de réalisation, chacun des organes de préhension 44 porte un récipient 18 comme cela est illustré à la figure 5.

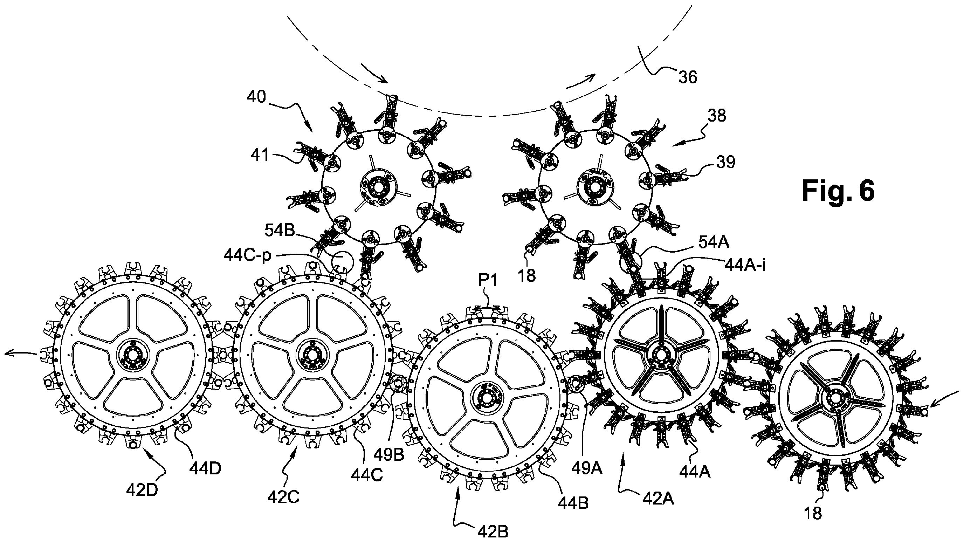

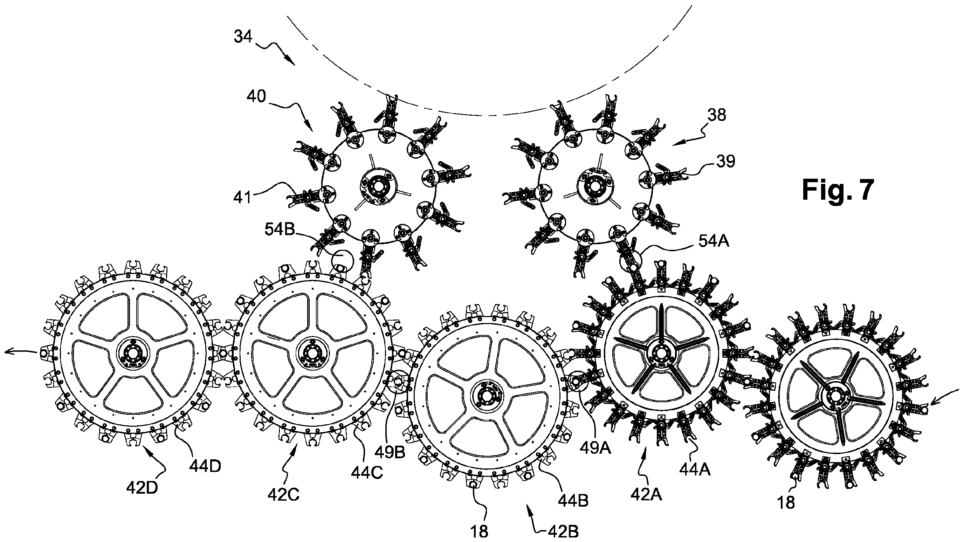

Un deuxième mode de réalisation de l'invention qui est représenté aux figures 6 et 7 permet d'éviter de démonter les organes 39, 41 de préhension des roues 38, 40 d'entrée et de sortie, en mode de contournement.

Pour éviter que tous les récipients 18 ne soient automatiquement transférés à la roue 38 d'entrée avant d'arriver dans la zone 49A de tangence amont, deux organes 39 de préhension consécutifs de la roue 38 d'entrée sont écartés d'un pas "P1" circonférentiel deux fois supérieur au pas "P2" circonférentiel séparant deux organes de préhension consécutifs de chacune des roues de convoyage amont et aval, comme cela est illustré à la figure 4. A cet effet, chacune des roues 38, 40 d'entrée et de sortie comporte deux fois moins d'organes 39, 41 de préhension qu'une roue 42A à 42D de convoyage. Dans le mode de réalisation représenté aux figures, la roue 38 d'entrée et la roue 40 de sortie comportent chacune dix organes 39, 41 de préhension.

Ainsi, en fonctionnement synchronisé des roues 42A à 42D de convoyage, chaque organe de préhension 44A impair de la roue 42A de convoyage amont est susceptible d'être en coïncidence avec un organe 39 de préhension de la roue 38 d'entrée dans la zone 54A de tangence d'entrée, comme cela est illustré à droite de la figure 6 pour l'organe de préhension impair de la roue 42A de convoyage amont indiqué par la référence "44A-i".

Au contraire, chaque organe 44A de préhension pair de la roue 42A de convoyage amont passe dans la zone 54A de tangence d'entrée entre deux organes 39 de préhension de la roue 38 d'entrée, comme cela est illustré à gauche de la figure 6 pour l'organe de préhension pair de la roue 42C de convoyage aval indiqué par la référence "44C-p".

Dans l'exemple représenté aux figures 6 et 7, deux organes 44B de préhension consécutifs de la roue 42B de contournement sont écartés d'un pas "P1" circonférentiel identique au pas "P1" circonférentiel séparant deux organes 44A, 44C de préhension consécutifs de chacune des roues 42A, 42C de convoyage amont et aval. Ainsi, tous les organes 44A de préhension de la roue 42A de convoyage amont, respectivement de la roue 42C de convoyage aval, sont en coïncidence avec un organe 44B de préhension correspondant de la roue 42B de contournement à son passage dans la zone 49A de tangence amont, respectivement dans la zone 49B de tangence aval.

De manière symétrique, les organes 41 de préhension de la roue 40 de sortie sont en coïncidence avec les organes 44C de préhension impairs de la roue 42C de convoyage aval, tandis que les organes 44C de préhension pairs de ladite roue 42C de convoyage aval passent entre deux organes 41 de préhension consécutifs de la roue 40 de sortie au niveau de la zone 54B de tangence de sortie.

L'installation 20 est susceptible de fonctionner selon un premier mode de fonctionnement dit "de revêtement des récipients 18" et selon un deuxième mode de fonctionnement dit "de contournement de la station 34 de revêtement". Quel que soit le mode de fonctionnement activé, un organe 44A de préhension sur deux de la roue 42A de convoyage est laissé inoccupé. Ceci est par exemple effectué en réglant l'indexation angulaire du carrousel de soufflage. Une telle opération est notamment permise par le fait que chaque module possède un moyen d'entraînement indépendant de ses éléments mobiles.

Comme représenté à la figure 6, en mode de revêtement, seuls les organes 44A de préhension impairs de la roue 42A de convoyage amont sont alimentés en récipients 18. Les organes 44A de préhension pairs sont laissés libres. Ainsi, les récipients 18 sont automatiquement transférés à la roue 38 d'entrée qui tourne de manière synchronisée avec les roues 42A à 42D de convoyage.

Comme représenté à la figure 7, en mode de contournement de la station 34 de revêtement de l'installation, les récipients 18 sont distribués aux organes 44A de préhension pairs de la roue 42A de convoyage amont, la roue 42B de contournement tournant de manière synchronisée avec les roues 42A; 42C de convoyage amont et aval. Ainsi, lorsque l'organe 44A de préhension pair portant un récipient 18 arrive au niveau de la zone 54A de tangence d'entrée, il n'est pas en coïncidence avec un organe 39 de préhension de la roue 38 d'entrée. L'organe 44A de préhension poursuit donc son trajet en portant le récipient 18 jusqu'à la zone 49A de tangence amont dans laquelle le récipient 18 est transféré à un organe 44B de préhension coïncidant de la roue 42B de contournement.

La roue 38 d'entrée et la roue 40 de sortie sont ainsi synchronisées en rotation avec les roues 42A à 42D de convoyage de manière que les organes 39, 41 de préhension des roues 38, 40 d'entrée et de sortie soient en coïncidence avec des organes 44A, 44C de préhension vides dans les zones 54A, 54B de tangence d'entrée et de sortie.

L'organe 44B de préhension de la roue 42B passe par la zone 49B de tangence aval en coïncidence avec un organe 44C de préhension pair de la roue 42C de convoyage aval. Le récipient 18 est ainsi transféré audit organe 44C de préhension pair.

Le récipient 18 poursuit son trajet en étant transporté par l'organe 44C de préhension pair. Lorsqu'il passe par la zone 54B de tangence de sortie, il n'est en coïncidence avec aucun organe 41 de préhension de la roue 40 de sortie. Il est donc libre de poursuivre son trajet jusqu'à la zone de tangence avec la prochaine roue 42D de convoyage sans interférer avec un organe 41 de préhension de la roue 40 de sortie.

Dans ces deux modes de fonctionnement, les roues 38, 40 d'entrée et de sortie sont susceptibles de tourner de manière synchronisée avec les roues 42A à 42D de convoyage.

En variante, les organes 39, 41 de préhension des roues 38, 40 d'entrée et de sortie sont commandées en permanence en position ouverte, par exemple par démontage de la came de commande. Ainsi, même lorsque les préformes passent par les zones 54A, 54B de tangences de manière synchronisée avec les organes 39, 41 de préhension des roues 38, 40 d'entrée et de sortie, elles ne sont pas saisies par lesdits organes 39, 41 de préhension. Ainsi, les préformes continuent leur trajet sur leur roue 42A, 42C de convoyage amont ou aval respective.

Selon une autre variante non représentée de l'invention, en mode de contournement, il est possible d'immobiliser les roues d'entrée et de sortie dans une position intermédiaire dans laquelle aucun de leurs organes de préhension n'est présent dans une des zones de tangence d'entrée ou de sortie de manière similaire à ce qui est illustré à la figure 5. Un tel fonctionnement, permet notamment d'immobiliser la station de revêtement pour une opération de maintenance tout en autorisant la production de récipients 18 dans un mode de contournement.

Selon une autre variante non représentée de l'invention, les roues d'entrée et de sortie sont désynchronisées des roues de convoyage, les organes de préhension desdites roues d'entrée et de sortie susceptibles d'interférer avec le passage des récipients 18 étant démontées. Ceci permet notamment d'effectuer des opérations de maintenance de la station de revêtement qui nécessitent d'actionner les roues d'entrée et de sortie.

Ainsi, lorsque les roues 38, 40 d'entrée et de sortie sont immobilisées, il est possible de démonter uniquement l'organe 39, 41 de préhension qui est située dans la zone de tangence 54A, 54B d'entrée et de sortie, comme cela est illustré à la figure 5.

En variante, tous les organes de préhension des roues d'entrée et de sortie sont démontés. Ceci permet notamment de faire tourner librement les roues d'entrée et de sortie sans interférer avec le passage des préformes.

Selon un troisième mode de réalisation de l'invention qui sera expliqué en référence aux figures 6 et 7, chaque roue 42A à 42D de convoyage est équipée de premiers organes de préhension adaptés pour la préhension de récipients 18 présentant un premier format qui sont agencés en alternance avec des deuxièmes organes de préhension adaptés pour la préhension de récipients 18 présentant un deuxième format.

Le premier format est par exemple formé par des bouteilles de petites tailles qui doivent être revêtues d'une couche barrière, tandis que le deuxième format est formé par des bouteilles de plus grande taille qui ne requièrent pas d'être revêtues d'une couche barrière. Les bouteilles du premier format présentent par exemple un col ayant un diamètre inférieur ou égal à 16 mm, tandis que les bouteilles du deuxième format présentent un col ayant un diamètre supérieur à 16 mm, par exemple 20 mm. En se reportant à la description du deuxième mode de réalisation, les organes de préhension correspondant au premier format forment ainsi les organes 44-i de préhension impairs, tandis que les organes de préhension correspondant au deuxième format forment les organes 44-p de préhension pairs.

Le fonctionnement d'une telle installation est identique à celui décrit dans le deuxième mode de réalisation. Ainsi, les récipients 18 de petites tailles passent automatiquement par la station 34 de revêtement, comme illustré à la figure 6, tandis que les récipients 18 de grande taille passent automatiquement par la roue 42B de contournement, comme illustré à la figure 7.

De ce fait, les roues 38, 40 d'entrée et de sortie sont chacune équipées d'organes 39, 41 de préhension adaptés pour la préhension de récipients 18 présentant uniquement le premier format.

Avantageusement, la roue de contournement est équipée de premiers organes de préhension adaptés pour la préhension de récipients 18 présentant le premier format qui sont agencés en alternance avec des deuxièmes organes de préhension adaptés pour la préhension de récipients 18 présentant du deuxième format. Ainsi, si l'on souhaite contourner la station 34 de revêtement pour réaliser des bouteilles de taille réduite sans couche barrière, il suffit de décaler les roues de convoyage d'un pas "P1" par rapport aux roues 38, 40 d'entrée et de sortie. De cette manière les organes de préhension impairs passent désormais par les zones 54A, 54B de tangence d'entrée et de sortie entre deux organes 39, 41 de préhension consécutifs desdites roues.

L'installation 20 réalisée selon l'un quelconque des modes de réalisation de l'invention, ainsi que le procédé de mise en oeuvre d'une telle installation 20 permettent avantageusement de réaliser sur une même installation des récipients 18 revêtus d'une couche barrière et des récipients 18 non revêtus d'une couche barrière.

De plus, une telle installation 20 est apte à poursuivre la production de récipients 18 même lorsque la station 34 de revêtement est mise hors ligne, par exemple pour une opération de maintenance.

En outre, une installation réalisée selon le troisième mode de réalisation de l'invention permet en outre de changer aisément de format de récipients 18 sans avoir à remplacer les organes de préhension.

Par ailleurs, chaque roue 42A à 42D de convoyage de la table 32 comporte au moins deux fois plus d'organes 44A à 44D de préhension que chaque roue 38 et 40 et que la roue de sortie de soufflage. Ainsi, il est possible de prévoir des organes 44A à 44D de préhension pour un premier format correspondant au format susceptible d'être chargé sur les roues 38, 40 d'entrée et de sortie, et des organes 44A à 44D pour au moins un deuxième format différent du premier format.

## Revendications

1. Installation (20) de fabrication de récipients (18) thermoplastiques comportant :
- une station (34) de revêtement de récipients comportant une roue (38) d'entrée et une roue (40) de sortie, chacune desdites roues (38, 40) étant équipée d'organes (39, 41) de préhension régulièrement répartis à sa périphérie ;
- une roue (42A) amont de convoyage équipée d'organes (44A) de préhension régulièrement répartis à sa périphérie, la roue (42A) amont de convoyage étant agencée pour permettre le transfert de récipients (18) par passage synchronisé lorsqu'un organe (44A) de préhension de la roue amont de convoyage portant un récipient est en coïncidence avec un organe (39) de préhension de la roue (38) d'entrée dans une zone (54A) de tangence d'entrée entre les deux roues (42A, 38) ;
- une roue (42C) aval de convoyage équipée d'organes (44C) de préhension régulièrement répartis à sa périphérie, la roue (42C) aval de convoyage étant agencée pour permettre le transfert de récipients (18) par passage synchronisé lorsqu'un organe (41) de préhension de la roue (40) de sortie portant un récipient (18) est en coïncidence avec un organe (44C) de préhension de la roue (42C) aval de convoyage dans une zone (54B) de tangence de sortie entre les deux roues (42C, 40) ;
**caractérisé en ce qu'**elle comporte une roue (42B) de contournement équipée d'organes (44B) de préhension individuelle de récipients (18) régulièrement répartis à sa périphérie, la roue (42B) de contournement étant directement tangente avec la roue (42A) amont de convoyage dans une zone (49A) de tangence amont et la roue (42B) de contournement étant directement tangente avec la roue (42C) aval de convoyage dans une zone (49B) de tangence aval.

2. Installation (20) selon la revendication précédente, **caractérisé en ce que** la zone (49A) de tangence amont entre la roue (42A) de convoyage amont et la roue (42B) de contournement est agencée en aval de la zone (54A) de tangence d'entrée entre la roue (42A) de convoyage amont et la roue (38) d'entrée.

3. Installation (20) selon l'une quelconque des revendications précédentes, **caractérisée en ce que** la zone (49B) de tangence aval entre la roue (42B) de contournement et la roue (42C) de convoyage aval est agencée en amont de la zone (54B) de tangence de sortie entre la roue (42C) de convoyage aval et la roue (40) de sortie.

4. Installation (20) selon la revendication précédente, **caractérisée en ce que** deux organes (39, 41) de préhension consécutifs de chacune des roues (38, 40) d'entrée et de sortie sont écartés d'un pas (P1) circonférentiel deux fois supérieur au pas (P2) circonférentiel séparant deux organes (44A, 44C) de préhension consécutifs de chacune des roues (42A, 42C) de convoyage amont et aval.

5. Installation (20) selon l'une quelconque des revendications précédentes, **caractérisé en ce que** chaque roue (42A, 42C) de convoyage amont et aval est équipée de premiers organes (44A-i, 44C-i) de préhension adaptés pour la préhension de récipients présentant un premier format qui sont agencés en alternance avec des deuxièmes organes (44A-p, 44C-p) de préhension adaptés pour la préhension de récipients (18) présentant un deuxième format.

6. Installation (20) selon la revendication précédente, **caractérisée en ce que** deux organes (44B) de préhension consécutifs de la roue (42B) de contournement sont écartés d'un pas (P1) circonférentiel deux fois supérieur au pas (P2) circonférentiel séparant deux organes (44A, 44C) de préhension consécutifs de chacune des roues (42A, 42C) de convoyage amont et aval.

7. Installation (20) selon l'une quelconque des revendications 1 à 5, **caractérisée en ce que** deux organes (44B) de préhension consécutifs de la roue (42B) de contournement sont écartés d'un pas (P2) circonférentiel identique au pas (P2) circonférentiel séparant deux organes (44A, 44C) de préhension consécutifs de chacune des roues (42A, 42C) de convoyage amont et aval.

8. Installation (20) selon la revendication précédente prise en combinaison avec la revendication 5, **caractérisée en ce que** la roue (42B) de contournement est équipée de premiers organes (44B) de préhension adaptés pour la préhension de récipients (18) présentant le premier format qui sont agencés en alternance avec des deuxièmes organes (44B) de préhension adaptés pour la préhension de récipients (18) présentant du deuxième format.

9. Procédé d'utilisation, dans un mode de contournement de la station (34) de revêtement, de l'installation (20) réalisée selon l'une quelconque des revendications précédentes, **caractérisé en ce que** les récipients (18) sont distribués un organe (44A) de préhension sur deux sur la roue (42A) de convoyage amont, la roue (42B) de contournement tournant de manière synchronisée avec les roues (42A, 42C) de convoyage amont et aval.

10. Procédé selon la revendication précédente, **caractérisé en ce que** les roues (38, 40) d'entrée et de sortie sont désynchronisées des roues (42A, 42C) de convoyage, les organes (39, 41) de préhension desdites roues (38, 40) d'entrée et de sortie susceptibles d'interférer avec le passage des récipients (18) étant démontées.

11. Procédé selon la revendication 9, **caractérisé en ce que** la roue (38) d'entrée et la roue (40) de sortie sont synchronisées en rotation avec les roues (42A, 42C) de convoyage de manière que les organes de préhension des roues (38, 40) d'entrée et de sortie soient en coïncidence avec des organes (44A, 44C) de préhension vides dans les zones (49A, 49B) de tangence d'entrée et de sortie.

## Patentansprüche

1. Anlage (20) zur Herstellung von thermoplastischen Behältern (18), umfassend:
- eine Station (34) zur Beschichtung von Behältern, die ein Eingangsrad (38) und ein Ausgangsrad (40) aufweist, wobei jedes der Räder (38, 40) mit regelmäßig an seinem Umfang verteilten Greiforganen (39, 41) ausgestattet ist;
- ein stromaufwärtiges Förderrad (42A), das mit regelmäßig an seinem Umfang verteilten Greiforganen (44A) ausgestattet ist, wobei das stromaufwärtige Förderrad (42A) dazu eingerichtet ist, die Übergabe von Behältern (18) durch synchronisierten Durchlauf zu ermöglichen, wenn ein Greiforgan (44A) des stromaufwärtigen Förderrades, das einen Behälter trägt, mit einem Greiforgan (39) des Eingangsrades (38) in einem Eingangstangentialbereich (54A) zwischen den beiden Rädern (42A, 38) übereinstimmt;
- ein stromabwärtiges Förderrad (42C), das mit regelmäßig an seinem Umfang verteilten Greiforganen (44C) ausgestattet ist, wobei das stromabwärtige Förderrad (42C) dazu eingerichtet ist, die Übergabe von Behältern (18) durch synchronisierten Durchlauf zu ermöglichen, wenn ein Greiforgan (41) des Ausgangsrades (40), das einen Behälter (18) trägt, mit einem Greiforgan (44C) des stromabwärtigen Förderrades (42C) in einem Ausgangstangentialbereich (54B) zwischen den beiden Rädern (42C, 40) übereinstimmt;
**dadurch gekennzeichnet, dass** sie ein Umgehungsrad (42B) umfasst, das mit regelmäßig an seinem Umfang verteilten Greiforganen (44B) zum individuellen Greifen von Behältern (18) ausgestattet ist, wobei das Umgehungsrad (42B) das stromaufwärtige Förderrad (42A) in einem stromaufwärtigen Tangentialbereich (49A) direkt tangiert und das Umgehungsrad (42B) das stromabwärtige Förderrad (42C) in einem stromabwärtigen Tangentialbereich (49B) direkt tangiert.

2. Anlage (20) nach dem vorhergehenden Anspruch, **dadurch gekennzeichnet, dass** der stromaufwärtige Tangentialbereich (49A) zwischen dem stromaufwärtigen Förderrad (42A) und dem Umgehungsrad (42B) stromab des Eingangstangentialbereichs (54A) zwischen dem stromaufwärtigen Förderrad (42A) und dem Eingangsrad (38) angeordnet ist.

3. Anlage (20) nach einem der vorhergehenden Ansprüche, **dadurch gekennzeichnet, dass** der stromabwärtige Tangentialbereich (49B) zwischen dem Umgehungsrad (42B) und dem stromabwärtigen Förderrad (42C) stromauf des Ausgangstangentialbereichs (54B) zwischen dem stromabwärtigen Förderrad (42C) und dem Ausgangsrad (40) angeordnet ist.

4. Anlage (20) nach dem vorhergehenden Anspruch, **dadurch gekennzeichnet, dass** zwei aufeinander folgende Greiforgane (39, 41) jedes der Eingangs- und Ausgangsräder (38, 40) um einen umfangsmäßigen Abstand (P1) beabstandet sind, der doppelt so groß wie der umfangsmäßige Abstand (P2) ist, der zwei aufeinander folgende Greiforgane (44A, 44C) jedes der stromaufwärtigen und stromabwärtigen Förderräder (42A, 42C) trennt.

5. Anlage (20) nach einem der vorhergehenden Ansprüche, **dadurch gekennzeichnet, dass** jedes stromaufwärtige und stromabwärtige Förderrad (42A, 42C) mit ersten Greiforganen (44A-i, 44C-i) ausgestattet ist, die zum Greifen von Behältern geeignet sind, die ein erstes Format aufweisen, die abwechselnd mit zweiten Greiforganen (44A-p, 44C-p) angeordnet sind, die zum Greifen von Behältern (18) geeignet sind, die ein zweites Format aufweisen.

6. Anlage (20) nach dem vorhergehenden Anspruch, **dadurch gekennzeichnet, dass** zwei aufeinander folgende Greiforgane (44B) des Umgehungsrades (42B) um einen umfangsmäßigen Abstand (P1) beabstandet sind, der doppelt so groß wie der umfangsmäßige Abstand (P2) ist, der zwei aufeinander folgende Greiforgane (44A, 44C) jedes der stromaufwärtigen und stromabwärtigen Förderräder (42A, 42C) trennt.

7. Anlage (20) nach einem der Ansprüche 1 bis 5, **dadurch gekennzeichnet, dass** zwei aufeinander folgende Greiforgane (44B) des Umgehungsrades (42B) um einen umfangsmäßigen Abstand (P2) beabstandet sind, der identisch mit dem umfangsmäßigen Abstand (P2) ist, der zwei aufeinander folgende Greiforgane (44A, 44C) jedes der stromaufwärtigen und stromabwärtigen Förderräder (42A, 42C) trennt.

8. Anlage (20) nach dem vorhergehenden Anspruch in Verbindung mit Anspruch 5, **dadurch gekennzeichnet, dass** das Umgehungsrad (42B) mit ersten Greiforganen (44B) ausgestattet ist, die zum Greifen von Behältern (18) geeignet sind, die das erste Format aufweisen, die abwechselnd mit zweiten Greiforganen (44B) angeordnet sind, die zum Greifen von Behältern (18) geeignet sind, die das zweite Format aufweisen.

9. Verfahren zur Verwendung der nach einem der vorhergehenden Ansprüche ausgeführten Anlage (20) in einer Betriebsart der Umgehung der Beschichtungsstation (34), **dadurch gekennzeichnet, dass** die Behälter (18) am stromaufwärtigen Förderrad (42A) aller zwei Greiforgane (44A) verteilt sind, wobei das Umgehungsrad (42B) synchronisiert mit den stromaufwärtigen und stromabwärtigen Förderrädern (42A, 42C) dreht.

10. Verfahren nach dem vorhergehenden Anspruch, **dadurch gekennzeichnet, dass** die Eingangs- und Ausgangsräder (38, 40) von den Förderrädern (42A, 42C) desynchronisiert sind, wobei die Greiforgane (39, 41) der Eingangs- und Ausgangsräder (38, 40), die mit der Übergabe der Behälter (18) interferieren könnten, demontiert sind.

11. Verfahren nach Anspruch 9, **dadurch gekennzeichnet, dass** das Eingangsrad (38) und das Ausgangsrad (40) mit den Förderrädern (42A, 42C) drehsynchronisiert sind, so dass die Greiforgane der Eingangs- und Ausgangsräder (38, 40) in den Eingangs- und Ausgangstangentialbereichen (49A, 49B) mit leeren Greiforganen (44A, 44C) übereinstimmen.

## Claims

1. Installation (20) for manufacturing thermoplastic containers (18) comprising:
- a station (34) for coating containers comprising an entry wheel (38) and an exit wheel (40), each of said wheels (38, 40) being equipped with gripping members (39, 41) distributed regularly over the periphery thereof;
- an upstream conveying wheel (42A) equipped with gripping members (44A) distributed regularly over the periphery thereof, the upstream conveying wheel (42A) being arranged such as to allow the transfer of containers (18) by synchronized passage when a gripping member (44A) of the upstream conveying wheel carrying a container coincides with a gripping member (39) of the entry wheel (38) in an entry tangency zone (54A) between the two wheels (42A, 38);
- a downstream conveying wheel (42C) equipped with gripping members (44C) distributed regularly over the periphery thereof, the downstream conveying wheel (42C) being arranged such as to allow the transfer of containers (18) by synchronized passage when a gripping member (41) of the exit wheel (40) carrying a container (18) coincides with a gripping member (44C) of the downstream conveying wheel (42C) in an exit tangency zone (54B) between the two wheels (42C, 40);
**characterized in that** it comprises a bypass wheel (42B) equipped with members (44B) for individual gripping of containers (18) distributed regularly over the periphery thereof, the bypass wheel (42B) being directly tangential relative to the upstream conveying wheel (42A) in an upstream tangency zone (49A) and the bypass wheel (42B) being directly tangential relative to the downstream conveying wheel (42C) in a downstream tangency zone (49B) .

2. Installation (20) according to the preceding claim, **characterized in that** the upstream tangency zone (49A) between the upstream conveying wheel (42A) and the bypass wheel (42B) is arranged downstream of the entry tangency zone (54A) between the upstream conveying wheel (42A) and the entry wheel (38).

3. Installation (20) according to either one of the preceding claims, **characterized in that** the downstream tangency zone (49B) between the bypass wheel (42B) and the downstream conveying wheel (42C) is arranged upstream of the exit tangency zone (54B) between the downstream conveying wheel (42C) and the exit wheel (40).

4. Installation (20) according to the preceding claim, **characterized in that** two consecutive gripping members (39, 41) of each of the entry and exit wheels (38, 40) are separated by a circumferential pitch (P1) twice as large as the circumferential pitch (P2) separating two consecutive gripping members (44A, 44C) of each of the upstream and downstream conveying wheels (42A, 42C).

5. Installation (20) according to any one of the preceding claims, **characterized in that** each upstream and downstream conveying wheel (42A, 42C) is equipped with first gripping members (44A-i, 44C-i) adapted for gripping containers having a first format that are arranged alternately with second gripping members (44A-p, 44C-p) adapted for gripping containers (18) having a second format.

6. Installation (20) according to the preceding claim, **characterized in that** two consecutive gripping members (44B) of the bypass wheel (42B) are separated by a circumferential pitch (P1) that is twice as large as the circumferential pitch (P2) separating two consecutive gripping members (44A, 44C) of each of the upstream and downstream conveying wheels (42A, 42C).

7. Installation (20) according to any one of Claims 1 to 5, **characterized in that** two consecutive gripping members (44B) of the bypass wheel (42B) are seperated by a circumferential pitch (P2) that is identical to the circumferential pitch (P2) separating two consecutive gripping members (44A, 44C) of each of the upstream and downstream conveying wheels (42A, 42C).

8. Installation (20) according to the preceding claim taken in combination with Claim 5, **characterized in that** the bypass wheel (42B) is equipped with first gripping members (44B) adapted for gripping containers (18) having the first format that are arranged alternately with second gripping members (44B) adapted for gripping containers (18) having the second format.

9. Method for using, in a bypass mode of the coating station (34), the installation (20) embodied according to any one of the preceding claims, **characterized in that** the containers (18) are distributed one gripping member (44A) out of two on the upstream conveying wheel (42A), the bypass wheel (42B) turning in a synchronized manner with the upstream and downstream conveying wheels (42A, 42C).

10. Method according to the preceding claim, **characterized in that** the entry and exit wheels (38, 40) are not synchronized with the conveying wheels (42A, 42C), the gripping members (39, 41) of said entry and exit wheels (38, 40) capable of interfering with the passage of the containers (18) being unattached.

11. Method according to Claim 9, **characterized in that** the entry wheel (38) and the exit wheel (40) are synchronized in rotation with the conveying wheels (42A, 42C) such that the gripping members of the entry and exit wheels (38, 40) coincide with empty gripping members (44A, 44C) in the entry and exit tangency zones (49A, 49B).
